**Europäisches Patentamt**

**European Patent Office**

**Office européen des brevets**

(11) Veröffentlichungsnummer: **0 361 159**

**A2**

## (12) EUROPÄISCHE PATENTANMELDUNG

(21) Anmeldenummer: 89116475.8

(22) Anmeldetag: 06.09.89

(51) Int. Cl.⁵: **G02B 6/42 , G02B 6/12**

(30) Priorität: 29.09.88 DE 3833112

(43) Veröffentlichungstag der Anmeldung:
**04.04.90 Patentblatt 90/14**

(84) Benannte Vertragsstaaten:
**DE FR GB IT NL**

(71) Anmelder: **Siemens Aktiengesellschaft
Wittelsbacherplatz 2
D-8000 München 2(DE)**

(72) Erfinder: **Nolting, Hans-Peter, Dr.
Ringslebenstrasse 68
D-1000 Berlin 47(DE)**

(54) **Anordnung zur Herstellung einer Kopplung zwischen einem optischen Schichtwellenleiter und einem optischen Absorber.**

(57) Eine Kopplung zwischen einem Schichtwellenleiter und einer Schicht aus lichtabsorbierendem Material eines optischen Detektors ist für die monolithische Integration gut geeignet. Allerdings ist der leckwellenstrukturbedingte effektive Absorptionskoeffizient $\alpha_{eff}$ im Vergleich zum allein materialbedingten Absorptionskoeffizienten $\alpha_{Bulk}$ sehr klein. Es soll daher eine derartige Koppelanordnung mit einem höheren effektiven Absorptionskoeffizienten $\alpha_{eff}$ angegeben werden.

Dazu ist neben einer auf einer Seite (11) des Schichtwellenleiters (1) angeordneten Schicht (21) aus lichtabsorbierendem Material auch eine auf der anderen Seite (12) des Schichtwellenleiters (1) angeordnete zweite Schicht (22) aus lichtabsorbierendem Material durch Leckwellenkopplung an den Schichtwellenleiter (1) gekoppelt.

Anwendung bei Optical Electronic Integrated Circuits (OEIC's).

EP 0 361 159 A2

## Anordnung zur Herstellung einer Kopplung zwischen einem optischen Schichtwellenleiter und einem optischen Absorber

Die Erfindung betrifft eine Anordnung zur Herstellung einer Kopplung zwischen einem Schichtwellenleiter und einem optischen Absorber nach dem Oberbegriff des Patentanspruchs 1.

Für zukünftige, optisch-elektronische integrierte Schaltkreise (OEIC's, optical Electronic Integrated Circuits), bei denen optische Wellenleiter und optoelektronische Detektoren integriert sind, stellt die Kopplung zwischen Wellenleiter und Detektor eine zentrale Frage der monolithischen Integration dar. Für breitbandige Anwendungen in der optischen Nachrichtentechnik werden zur Kleinhaltung der Bauelementelänge und damit der Detektorkapazität hohe Lichtabsorptionskoeffizienten benötigt.

Es können generell zwei bekannte Anordnungen zur Kopplung eines Wellenleiters an einen optischen Detektor unterschieden werden:

Bei einer Anordnung endet der Wellenleiter abrupt vor dem Detektorgebiet und die optische Welle wird sehr effektiv mit einem durch diese Struktur bedingten effektiven Absorptionskoeffizienten $\alpha_{eff}$ in der Größenordnung eines maximal erreichbaren, allein durch das verwendete lichtabsorbierende Material bedingten Lichtabsorptionskoeffizienten $\alpha_{Bulk}$ absorbiert. Dies ist die übliche Anordnung bei der Verkopplung eines Lichtwellenleiters mit einem diskreten Detektor.

Bei der monolithischen Integration führt diese eine Koppelanordnung aber zu schwierigen technologischen Prozessen, z.B. zu selektiver Epitaxie zum Auffüllen einer geätzten Detektorgrube.

Die andere bekannte Anordnung ist entsprechend der eingangs genannten Art aufgebaut, wobei die Lichtwelle in einer Schichtanordnung absorbiert wird, bei welcher der passive Schichtwellenleiter und die Schicht aus lichtabsorbierendem Material des Detektors übereinander angeordnet sind. Diese Art der Kopplung ist als Leckwellenkopplung bekannt und für die monolithische Integration gut geeignet.

Allerdings hat es sich gezeigt, daß bei Leckwellenkopplung der durch die Leckwellenstruktur bedingte effektive Absorptionskoeffizient $\alpha_{eff}$ im Vergleich zum allein materialbedingten Absorptionskoeffizienten $\alpha_{Bulk}$ sehr klein ist. Beispielsweise haben experimentelle Untersuchungen im Materialsystem InGaAsP/InP (siehe dazu Electronics Letters, Vol. 23, No. 1 (1987) S. 2-4 und J. of. Lightwave Techn., Vol. 6, No. 3 (1988), S. 399-412) und Berechnungen (siehe dazu Electronics Letters, Vol. 23, No. 17 (1987) S. 895-897) gezeigt, daß bei der Leckwellenkopplung der effektive Absorptionskoeffizient $\alpha_{eff}$ in der Größenordnung von 200 cm$^{-1}$ liegt, während bei dem zugrunde gelegten absorbierenden Material der Absorptionskoeffizient $\alpha_{Bulk}$ einen Wert von 15000 cm$^{-1}$ hat.

Aufgabe der Erfindung ist es, eine für die monolithische Integration geeignete Anordnung der eingangs genannten Art mit einem höheren effektiven Absorptionskoeffizienten $\alpha_{eff}$ anzugeben.

Diese Aufgabe wird durch die im kennzeichnenden Teil des Patentanspruchs 1 angegebenen Merkmale gelöst, wonach eine doppelseitige Struktur oder Doppeldetektorstruktur gegeben ist.

Bei der einfach aufgebauten erfindungsgemäßen Anordnung können hohe Werte für den effektiven Absorptionskoeffizienten $\alpha_{eff}$ erreicht werden, die um mehrere Zehnerpotenzen größer sind, als die bei den bekannten Anordnungen der eingangs genannten Art erreichten Werte. Diese hohen Werte liegen im Bereich des 0,5 -0,75-fachen des Absorptionskoeffizienten $\alpha_{Bulk}$ des gewählten lichtabsorbierenden Materials der Schichten. Die Koppeleffizienz ist bei unkritischen Werten für die Schichtdicke hoch, so daß die Geometrieparameter dieser Anordnung nicht empfindlich sind.

Als Ursache für den sehr hohen effektiven Absorptionskoeffizienten ist die Symmetrie der Schichtenfolge erste (zweite) Schicht - Schichtwellenleiter - zweite (erste) Schicht erkannt worden, die eine Richtkopplerstruktur darstellt.

Der effektive Absorptionskoeffizient $\alpha_{eff}$ der erfindungsgemäßen Anordnung hängt bis zu sehr hohen Werten des materialbedingten Absorptionskoeffizienten $\alpha_{Bulk}$, beispielsweise von 0 bis 15000 cm$^{-1}$ und mehr, linear von dem letztgenannten Koeffizienten ab, was bedeutet, daß keine Verdrängung des elektromagnetischen Feldes des Lichts aus den Schichten aus lichtabsorbierendem Material in den Schichtwellenleiter hinein auftritt.

Im Falle einer symmetrischen Struktur der erfindungsgemäßen Anordnung, gekennzeichnet durch gleiche Dicke der beiden Schichten aus lichtabsorbierendem Material, und symmetrischer Ankopplung des Schichtwellenleiters, gekennzeichnet durch gleichen Abstand der beiden Schichten aus lichtabsorbierendem Material von der Mittelebene des Schichtwellenleiters, tragen nur symmetrische Moden zur Ankopplung bei. Eine Überlappung des elektromagnetischen Feldes mit asymmetrischen Moden im Wellenleiter ist dann nicht vorhanden.

Bei asymmetrischen Schichten aus lichtabsorbierendem Material, bei denen die Dicken dieser Schichten voneinander verschieden sind, oder bei asymmetrischer Ankopplung, gekennzeichnet durch verschiedenen Abstand der beiden Schichten aus lichtabsorbierendem Material von der Mittelebene des Schichtwellenleiters, werden sowohl symmetrische als auch asymmetrische Moden angeregt. Da beide Modenarten näherungsweise gleiche Ausbreitungskonstanten haben, ist auch für die asymmetrische Konfiguration der erfindungsgemäßen Anordnung die Absorption sehr hoch und effizient. Asymmetrische Schichten aus lichtabsorbierendem Material und asymmetrische Ankopplung sind wegen ihrer leichten Herstellung für die Praxis attraktiv.

Außerdem tragen bei der erfindungsgemäßen Anordnung strahlende Moden zur Absorption bei.

Bevorzugte und vorteilhafte Ausgestaltungen der erfindungsgemäßen Anordnung gehen aus den Unteransprüchen hervor.

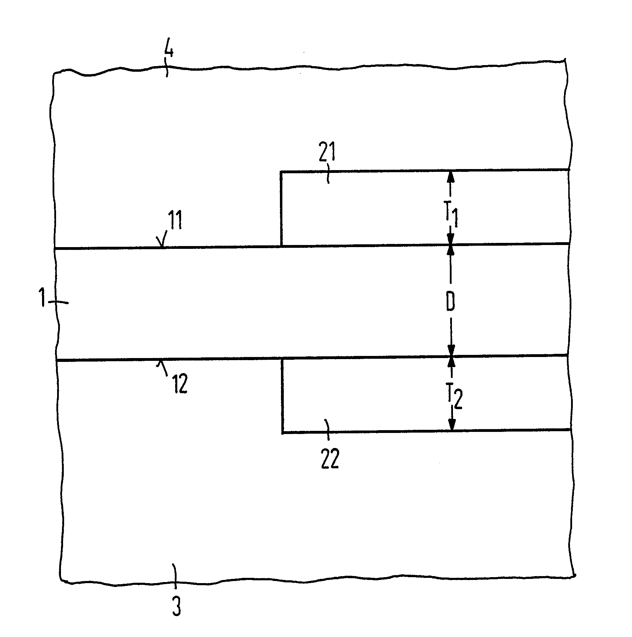

Die Erfindung wird in der nachfolgenden Beschreibung anhand der Figur beispielhaft näher erläutert.

Die Figur zeigt in schematischer Darstellung einen Schnitt durch ein Ausführungsbeispiel der erfindungsgemäßen Anordung.

Bei dem dargestellten Ausführungsbeispiel ist der Schichtwellenleiter 1 an seiner Unterseite 11 auf einem festen Substrat aufgebracht. An seine Oberseite grenzt ein Superstrat 4, das bevorzugterweise aus dem gleichen Material wie das Substrat 3 besteht. Der Schichtwellenleiter 1 ist damit ein symmetrischer Schichtwellenleiter. Wenn die beiden Materialien, die auf beiden Seiten 11 und 12 angrenzen, voneinander verschieden sind, liegt ein asymmetrischer Wellenleiter vor, der ebenfalls Verwendung finden kann. Beispielsweise kann an die Oberseite 11 Luft oder ein Oxid angrenzen und an die Unterseite 12 ein anderes Material.

Auf der Oberseite 11 des Schichtwellenleiters 1 ist die erste Schicht 21 aus lichtabsorbierendem Material aufgebracht, die zwischen dem Superstrat 4 und dem Schichtwellenleier 1 angeordnet ist.

Auf der Unterseite 12 des Schichtwellenleiters 1 ist gegenüber der ersten Schicht 21 die zweite Schicht 22 aus lichtabsorbierendem Material aufgebracht, die zwischen dem Substrat 3 und dem Schichtwellenleiter angeordnet ist. Die beiden Schichten 21 und 22 können auch gegeneinander versetzt sein.

Substrat 3 und Superstrat 4 bestehen aus n-dotiertem InP, der passive Schichtwellenleiter 1 aus n-dotiertem quaternärem Material mit einer Bandkante $\lambda_Q$ von 0,92 $\mu$m bis 1,3 $\mu$m, vorzugsweise von 0,97 $\mu$m und die erste und zweite Schicht 21, 22 aus lichtabsorbierendem Material aus n-dotiertem ternärem Material, beispielsweise InGaAs. Die Dicke D des Schichtwel lenleiters 1 beträgt 0,8 bis 1,6 $\mu$m, vorzugsweise 0,8 um. Die Dicke $T_1$ der ersten und die Dicke $T_2$ der zweiten Schicht 21, 22 liegt jeweils vorzugsweise im Bereich zwischen 0,2 und 0,4 $\mu$m und kann für beide Schichten 21, 22 gleich groß sein. Bei einer Lichtwellenlänge $\lambda =$ 1,3 $\mu$m kann bei dem ternären Material für den Absorptionskoeffizienten $\alpha_{Bulk}$ ein Wert von 15000 cm$^{-1}$ und eine Brechzahl von 3,58, für das quaternäre Material eine Brechzahl von 3,233 und für das InP eine Brechzahl von 3,2 angenommen werden. Der effektive Absorptionskoeffizient $\alpha_{eff}$ hat unter diesen Bedingungen einen Wert von etwa 8000 bis 12000 cm$^{-1}$ bei einer hohen Koppeleffizienz von etwa 0,6 bis 0,8.

## Ansprüche

1. Anordnung zur Herstellung einer Kopplung zwischen einem insbesondere passiven optischen Schichtwellenleiter (1) und einem, eine Schicht (21) aus lichtabsorbierendem Material aufweisenden optischen Absorber, insbesondere eines optischen Detektors, wobei die auf einer Seite des Schichtwellenleiters (1) angeordnete Schicht (2) durch Leckwellenkopplung an den Schichtwellenleiter (1) gekoppelt ist, **dadurch gekennzeichnet,** daß eine auf einer anderen Seite (12) des Schichtwellenleiters (1) angeordnete andere Schicht (22) aus lichtabsorbierendem Material durch Leckwellenkopplung an den Schichtwellenleiter (1) gekoppelt ist.

2. Anordnung nach Anspruch 1, **dadurch gekennzeichnet,** daß die eine und andere Schicht (21, 22) einander gegenüberliegen.

3. Anordnung nach Anspruch 1 oder 2, **dadurch gekennzeichnet,** daß die eine und andere Schicht (21, 22) den gleichen materialbedingten Absorptionskoeffizienten ($\alpha_{Bulk}$) aufweisen.